# EUROPÄISCHE PATENTANMELDUNG

(11) **EP 0 600 122 A1**
(43) Veröffentlichungstag der Anmeldung: **08.06.1994**
(21) Anmeldenummer: 92120564.7
(22) Anmeldetag: 02.12.1992
(51) Int. Cl.: G06F 13/40

(54) **Mikroprozessor mit einer integrierten Bussteuereinheit**

(71) Anmelder: SIEMENS AKTIENGESELLSCHAFT, D-80333 München (DE)
(72) Erfinder: Mariutti, Peter, Dipl.-Ing., W-8165 Fischbachau 4 (DE); Schönberger, Franz, Dipl.-Ing., W-8000 München 45 (DE); Sulzer, Hans, Dipl.-Ing., W-8058 Erding (DE); Schmid, Richard, Dipl.-Ing., W-8000 München 70 (DE); John, Wolfgang, Dipl.-Ing., W-8000 München 40 (DE); Rohm, Peter, Dipl.-Ing., W-8068 Pfaffenhofen (DE)

(57) **Zusammenfassung**

Der erfindungsgemäße Mikroprozessor weist eine integrierte Bussteuereinheit (9) auf, welche einen Schreib-Pufferspeicher (2) der Tiefe n ≧ 1 hat, der über einen ersten Bus (1) mit einer CPU verbunden ist. Weiterhin ist eine Busschnittstelleneinheit (3) sowie eine "Timing"-Steuereinheit (4), die mit mindestens einem zweiten Bus (5) verbunden ist, vorgesehen. Die Busschnittstelleneinheit (3) sowie die "Timing"-Steuereinheit (4) steuern unabhängig von der CPU den zeitlichen Ablauf der Signale auf dem mitintegrierten Bus (5).

## Beschreibung

Die Erfindung betrifft einen Mikroprozessor gemäß dem Oberbegriff des Anpruchs 1.

Ein derartiger Mikroprozessor ist in den meisten Fällen ein sogenannter Mikrokontroller. Die zentrale Recheneinheit ist dabei oftmals ein sogenannter CISC-Prozessor (complex instruction set computer). Für besonders leistungsfähige Mikroprozessoren/Mikrokontroller insbesondere in Hinblick auf Parallelverarbeitungsmöglichkeiten wird jedoch anstelle eines CISC-Prozessors ein sogenannter RISC-Prozessor (reduced instruction set computer) verwendet. Die Befehlsabarbeitung und Datenabarbeitung kann bei derartigen Prozessoren z.B. in einer mehrstufigen Pipelineverarbeitung "on Chip" stattfinden. Als Programmspeicher sind meistens ebenfalls "on Chip" ein Befehlsfestwertspeicher, ein Befehlsarbeitsspeicher sowie ein Befehlscachespeicher vorgesehen. Weiterhin ist eine Bussteuereinheit vorgesehen, welche den Prozessor mit den verschiedensten Peripherieeinheiten verbindet.

Um besonders schnell beim Lesezugriff auf extern angeschlossene Speicher zu sein, weisen derartige Systeme sogenannte "Cache-Speicher" auf. Bei jedem externen Zugriff auf einen Speicher, der meistens über eine Bussteuereinheit erfolgt, wird das gelesene Datum gleichzeitig in die zentrale Recheneinheit gelesen und in den "Cache"-Speicher geschrieben. bei einem erneuten Zugriff auf eine bereits einmal gelesene Speicherzelle muß dann nicht erneut der relativ langsame externe Speicher nochmals ausgelesen werden, sondern es kann aus dem sehr schnellen "Cache-Speicher" praktisch ohne Geschwindigkeitsverlust gelesen werden. Ein Schreiben auf externe Speicherzellen erfolgt ebenfalls gleichzeitig in den "Cache-Speicher" und in den externen Speicher.

Weist der Mikrokontroller einen besonders hochleistungsfähigen Prozessor auf, so wird dessen Leistung oftmals aber durch eventuell langsam arbeitende Peripherieeinheiten stark gebremst, da deren Schreib-Lesezugriffszeiten oft deutlich unter der des Prozessors liegen.

Aufgabe der vorliegenden Erfindung ist es daher, einen Mikroprozessor anzugeben, dessen leistungsfähiger Prozessor möglichst wenig durch an ihn angeschlossene Peripherieeinheiten beeinträchtigt wird.

Diese Aufgabe wird durch den kennzeichnenden Teil des Anspruchs 1 gelöst. Weiterbildungen sind Kennzeichen der Unteransprüche.

Weist der Mikrokontroller einen besonders hochleistungsfähigen Prozessor auf, so wird dessen Leistung oftmals aber durch eventuell langsam arbeitende Peripherieeinheiten stark gebremst, da deren Schreib-Lesezugriffszeiten oft deutlich unter der des Prozessors liegen.

Aufgabe der vorliegenden Erfindung ist es daher, einen Mikroprozessor anzugeben, dessen leistungsfähiger Prozessor möglichst wenig durch an ihn angeschlossene Peripherieeinheiten beeinträchtigt wird.
Diese Aufgabe wird durch den kennzeichnenden Teil des Anspruchs 1 gelöst. Weiterbildungen sind Kennzeichen der Unteransprüche.

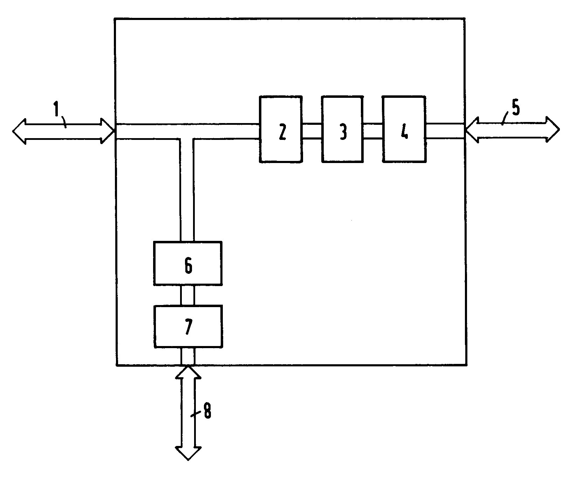

Die Erfindung wird nachfolgend anhand einer einzigen Figur näher erläutert.

Das in der Figur dargestellte Blockschaltbild zeigt einen Prozessorbus 1 zur Anbindung einer nicht dargestellten zentralen Recheneinheit an die Bussteuereinheit 9. Die Bussteuereinheit 9 enthält einen Schreibpufferspeicher 2, der beispielsweise mit dem Prozessorbus 1 verbunden ist und zum Zwischenspeichern von den auf dem Prozessorbus 1 gelieferten Signalen dient. Weiterhin weist die Bussteuereinheit 9 eine Busschnittstelleneinheit 3 sowie eine Timing-Steuereinheit 4 auf. Mit 5 ist symbolisch der von der Bussteuereinheit gesteuerte interne Bus dargestellt. Zusätzlich kann die Bussteuereinheit 9 noch einen zusätzlichen Schreib/Lesepufferspeicher 6 sowie eine Speicheransteuereinheit 7 aufweisen. Die Speicheransteuereinheit 7 steuert einen externen Speicherbus 8, welcher die Anbindung von externer Peripherie wie z.B. externen Speichern oder anderen Peripherieeinheiten an den Mikroprozessor ermöglicht.

Zusätzlich kann die Bussteuereinheit 9 noch eine Arbitrierungseinheit aufweisen, welche in der vorliegenden Figur nicht näher dargestellt ist.

Aufgabe der Bussteuereinheit 9 und evtl. der Arbitrierungseinheit ist es, die Prioritätsgesteuerte reibungslose Zuteilung der Systemresourcen zu steuern. Das heißt, daß die Bussteuereinheit 9 die Kommunikation zwischen der am Prozessorbus 1 angeschlossenen zentralen Recheneinheit mit den am internen Bus 5 angeschlossenen Peripherieeinheiten und den am externen Bus 8 angeschlossenen externen Peripherieeinheiten steuert.

Ebenso kann sie aber auch die Kommunikation zwischen Master-Peripherieeinheiten, die am internen Bus 5 angeschlossen sind und Slave-Peripherieeinheiten welche am internen Bus 5 oder am externen Bus 8 angeschlossen sind ermöglichen. Aktive Master-Peripherieeinheiten am internen Bus 5 können z.B. DMA-Controller, Coprozessoren usw. sein. Auf die Speichersteuereinheit 7 kann zu einer bestimmten Zeit entweder von Seiten des internen Busses 5 oder von der zentralen Recheneinheit über den Prozessorbus 1 zugegriffen werden. Die Arbitrierungseinheit regelt bei mehreren Master-Einheiten auch diesen Zugriffsmechanismus. Da es sich bei der Speicherschnittstelle 7 in der Regel um eine langsame Schnittstelle handelt, kann diese erfindungsgemäß ebenfalls einen Pufferspeicher 6 aufweisen. Dieser kann z.B. die Speichertiefe n für den Schreibmodus aufweisen. Beim Schreiben von der zentralen Recheneinheit oder dem internen Bus 5 auf den Speicher wird also bis zu einer Tiefe von z.B. n = 8 x 32 Bitworten im Schreibfall sowohl Schreibadresse als auch die Schreibdaten und zusätzliche Steuersignale wie z.B. die Zugriffsbreite, Chip-Select-Sginale usw. in den Schreibzwischenspeicher 6 gespeichert und der eigentliche Schreibvorgang wird dann schnellst möglich von der Speichersteuereinheit 7 eigenhändig durchgeführt. Wartezyklen für die zu schreibende Peripherieeinheit oder die zentrale Recheneinheit werden nur notwendig, wenn der Zwischenspeicher 6 voll ist.

Für die Lesebetriebsart des Speichers, insbesondere für einen Zugriff der zentralen Recheneinheit ist ein ähnlicher Mechanismus in umgekehrter Richtung vorgesehen. Ist die zentrale Recheneinheit z.B. ein Riscprozessor so kommt es häufig vor, daß sogenannte Block-Cache-Refill-Operationen, d.h. Lesen des Speichers und Schreiben in einen Cache-Speicher, blockweise durchgeführt werden müssen. Um diesen Block-Cache-Refill möglichst schnell abarbeiten zu können, ist es notwendig vor Einlesen der Daten durch die zentrale Recheneinheit zuerst mit Hilfe eines sogenannten Readbuffers mehrere Datenworte direkt an der Speicherschnittstelle vorzulesen und zwischenzuspeichern, um dann in einen sogenannten "Instruction Streaming" oder "Block Refill" ohne Wartezeiten der zentralen Recheneinheit die Speicher-Werte insgesamt einlesen zu können. Auch hierfür kann wiederum der Pufferspeicher 6 dienen. Erfindungsgemäß kann dieser Mechanismus bei allen Lesezugriffen verwendet werden. In einer Weiterbildung kann dieser Mechanismus jedoch nur für sogenannte Cache-Refill-Memory-Read-Zyklen verwendet werden und ist bei normalen Lesezugriffen abgeschaltet.

Zur weiteren Geschwindigkeitssteigerung und zur Entkopplung der beiden Bussysteme 1, 5 ist ein weiterer Schreibspeicher 2 vorgesehen. Dieser puffert die zu schreibenden Daten der zentralen Recheneinheit und ist mit dem Bus 1 gekoppelt. Dieser Schreibzwischenspeicher 2 wird bei allen Schreiboperationen der zentralen Recheneinheit an den internen Bus 5 verwendet und dient zum Zwischenspeichern der Schreibadresse des Schreibdatums und der Zugriffsquantität (Byte/Halfword/Word). Dieser Schreibzwischenspeicher kann ebenfalls eine beliebige Tiefe n aufweisen. Die Breite dieses Schreibzwischenspeichers kann z.B. 32 Bit betragen. Für die zentrale Recheneinheit besteht der Vorteil des Schreibzwischenspeichers 2 darin, daß unabhängig davon, ob der interne Bus 5 gerade für diesen Schreibzugriff der zentralen Recheneinheit frei war oder nicht die zentrale Recheneinheit mit ihrer Programmabarbeitung sofort fortschreiten kann. Der eigentliche Schreibzugriff auf eine am Bus 5 angeschlossene Peripherieeinheit erfolgt durch die Bussteuereinheit selbständig.

Die Aufgabe der Speichersteuereinheit 7 ist es schnellstmöglich unter Ausnutzung der Beschleunigungsmöglichkeiten, wie z.B. Page/Interleave-Modus, der spezifischen Speichertypen, die Speicherschreib/Leseanforderungen des Schreib/Lesezwischenspeichers 6 durchzuführen. Die Geschwindigkeiten des extern angeschlossenen Speichers oder Peripherieeinheit ist programmierbar und gegenüber der internen Schnittstelle über den Schreib/Lesezwischenspeicher 6 entkoppelt. Die nach außen führende Schnittstelle der Speichersteuereinheit 7 unterstützt sämtliche Datenbusbreiten. Die Speichersteuereinheit 7 kann weiterhin so ausgebildet sein, daß sie spezielle Betriebsarten der am externen Bus 8 angeschlossenen Speicher unterstützt. So kann z.B. CAS before RAS Refresh, Self Refresh, Power Down Mode oder RAS only Refresh gewählt werden. Als Zugriffsarten für dynamische Speicher sind der Pagemode und optional ein Interleave-Modus zulässig.

Zudem werden auch SRAM, ROM und EEPROM Speicher unterstützt.

## Patentansprüche

1. Mikroprozessor mit einer intergrierten Bussteuereinheit (9),
**gekennzeichnet durch** einen Schreib-Pufferspeicher (2) der Tiefe n ≧ 1, der über einen ersten Bus (1) mit einer zentralen Recheneinheit verbunden ist, eine Busschnittstelleneinheit (3), sowie eine "Timing"-Steuereinheit (4), die mit mindestens einem zweiten Bus (5) verbunden sind und die den Zugriff von oder auf den zweiten Bus (5) sowie aufgrund der im Schreibpufferspeicher (2) stehenden Daten den zeitlichen Ablauf der Signale auf dem zweiten Bus (5) eigenständig steuert.

2. Mikroprozessor nach Anspruch 1, **dadurch gekennzeichnet,** daß der
Schreibpufferspeicher (2) Daten-, Adreß- und Steuersignale zwischenspeichert.

3. Mikroprozessor nach Anspruch 2, **dadurch gekennzeichnet,** daß die
Steuersignale Informationen über die Datenbreite aufweisen.

4. Mikroprozessor nach einem der vorhergehenden Ansprüche,
**dadurch gekennzeichnet,** daß ein Signal auf dem ersten Bus (1) erzeugt wird, wenn der Schreibpufferspeicher (2) vollständig beschrieben ist.

5. Mikroprozessor nach einem der Ansprüche 1 bis 4,
**dadurch gekennzeichnet,** daß die Bussteuereinheit eine Speicheransteuereinheit (7) sowie wenigstens einen weiteren Schreib/Lesepufferspeicher (6) zum Zwischenspeichern der über wenigstens einen weiteren Bus (8) in eine an diesem Bus (8) angeschlossene Funktionseinheit zu schreiben/lesenden Daten aufweist.
